# EUROPEAN PATENT APPLICATION

(11) **EP 4 822 839 A1**
(43) Date of publication of application: **14.10.2026**
(21) Application number: 24899865.0
(22) Date of filing: 04.12.2024
(51) Int. Cl.: H01M 50/169

(54) **BATTERY CELL CASING AND COVER PLATE ENGAGEMENT STRUCTURE, BATTERY CELL, AND BATTERY PACK**

(30) Priority: 04.12.2023 CN 202311656248
(71) Applicant: SVOLT Energy Technology Co., Ltd., Changzhou, Jiangsu 213200 (CN)
(72) Inventor: SUN, Chao, hangzhou, Jiangsu 213200 (CN); YUAN, Yue, hangzhou, Jiangsu 213200 (CN)
(74) Representative: Michalski Hüttermann & Partner mbB
(86) International application number: PCT/CN2024/136812
(87) International publication number: WO 2025/119227

(57) **Abstract**

A battery cell casing (1) and cover plate (2) engagement structure, a battery cell, and a battery pack. Said engagement structure comprises an opening (11) formed in a battery cell casing (1). A cover plate (2) is provided with a boss (21), the root of the boss (21) being provided with a lap joint portion (22); the boss (21) extends into the battery cell casing (1) via the opening (11); the lap joint portion (22) overlaps the battery cell casing (1); the boss (21) is in near-zero-clearance fit with the opening (11); an outer end face of the lap joint portion (22) is flush with an outer side face of the battery cell casing (1); and the cover plate (2) is welded to the battery cell casing (1). The ratio K1 of the thickness L2 of the lap joint portion (22) to the thickness L1 of the cover plate (2) satisfies: 16.7% < K1 < 80%; and the ratio K2 of the thickness Ln of the boss (21) to the thickness L1 of the cover plate (2) satisfies: 20%<K2<83.3%, and satisfies: Kl+ K2=1. Said engagement structure can improve the fitting degree of the battery cell casing (1) and the cover plate (2), and can improve the welding strength and welding yield between the battery cell casing (1) and the cover plate (2), thereby ensuring post-welding sealing performance.

## Description

### CROSS-REFERENCE TO RELATED APPLICATION

The present disclosure claims priority to Patent Application No. 202311656248.9, filed with the China National Intellectual Property Administration on December 4, 2023, entitled "BATTERY CELL CASING AND COVER PLATE ENGAGEMENT STRUCTURE, BATTERY CELL, AND BATTERY PACK", the content of which is incorporated herein by reference in its entirety.

### TECHNICAL FIELD

The present disclosure relates to the technical field of lithium batteries, and in particular to a battery cell housing and cover plate mating structure. The present disclosure also relates to a battery cell provided with the foregoing battery cell housing and cover plate mating structure. The present disclosure further relates to a battery pack provided with the foregoing battery cell.

### BACKGROUND ART

A lithium-ion power battery typically includes an internal battery structure and an external battery structure. The internal battery structure mainly includes a cell electrode assembly, and the external battery structure mainly includes a cell cover plate and a battery cell housing. The battery cell housing provides an accommodation space for the cell electrode assembly. The cell cover plate is fitted with the battery cell housing by welding to form a closed space, thereby forming a complete lithium-ion battery structure.

In a blade lithium-ion battery, a battery cell housing is usually formed by high-frequency welding or laser welding, and two sides of the housing are configured as opening structures to facilitate welding fit with cell cover plates. In the prior art, a cell electrode assembly is first mounted inside a battery cell housing, an opening is then closed with a cell cover plate, and the cell cover plate is then welded to the opening by laser seam welding, so as to achieve sealing between the cell cover plate and the battery cell housing.

However, the sealing welding manner described above fails to constrain the fitting dimensions and structure between the battery cell housing and the cover plate, which results in an insufficiently firm welded connection between the cell cover plate and the battery cell housing, a low welding yield, and susceptibility to cracking and damage at a welding gap between the cell cover plate and the battery cell housing, thereby increasing production costs and reducing production efficiency. Especially, when gas is generated during charge and discharge of a battery, the internal gas pressure will provide a shearing force at the welding gap, making the weld seam prone to cracking. Poor sealing performance leads to battery liquid leakage, resulting in battery failure, and even serious safety accidents in severe cases.

### SUMMARY

In view of this, the present disclosure is intended to provide a battery cell housing and cover plate mating structure, so as to improve the welding strength and welding yield between the battery cell housing and the cover plate.

To achieve the above objective, the technical solutions of the present disclosure are implemented as follows.

A battery cell housing and cover plate mating structure includes an opening formed in the battery cell housing, wherein
a cover plate is provided with a boss protruding toward one side of the battery cell housing, and a root portion of the boss is provided with a lapping portion; the boss extends into the battery cell housing via the opening; the lapping portion laps onto the battery cell housing; a length and a width of the boss are set corresponding to a length and a width of the opening, respectively; an outer end surface of the lapping portion is flush with an outer side surface of the battery cell housing; and the cover plate is welded to the battery cell housing;
in an assembled state of the cover plate and the battery cell housing, a ratio K1 of a thickness L2 of the lapping portion to a thickness L1 of the cover plate satisfies: K1 = L2/L1, and 16.7% ≤ K1 ≤ 80%; and a ratio K2 of a thickness Ln of the boss to the thickness L1 of the cover plate satisfies: K2 = Ln/L1, and 20% ≤ K2 ≤ 83.3%, and also satisfies: K1 + K2 = 1.

Further, the thickness L1 of the cover plate satisfies: 1.5 mm ≤ L1 ≤ 3 mm.

Further, the thickness L2 of the lapping portion satisfies: 0.5 mm ≤ L2 ≤ 2.4 mm.

Further, the thickness Ln of the boss satisfies: 0.6 mm ≤ Ln ≤ 2.5 mm.

Further, a wall thickness h of the battery cell housing satisfies: 0.2 mm ≤ h ≤ 3 mm.

Further, a guide insertion portion is provided on the boss.

Further, the guide insertion portion includes a chamfer formed at an end portion of the boss.

Further, a distance L4 of the chamfer along a direction of the boss extending into the battery cell housing is between 0.1 mm and 2 mm.

Further, along a direction of the boss extending into the battery cell housing, a ratio K3 of a dimension L3 of a portion of the boss in contact with the battery cell housing to the thickness L1 of the cover plate satisfies: K3=L3/L1, and 16.7% ≤ K3 ≤ 80%.

Further, a ratio K4 of a sum of the thickness L2 of the lapping portion and the dimension L3 of the portion of the boss in contact with the battery cell housing to the thickness L1 of the cover plate satisfies: K4 = (L2 + L3)/L1, and 33.3% ≤ K4 ≤ 96.7%.

Further, the dimension L3 of the portion of the boss in contact with the battery cell housing satisfies: 0.5 mm ≤ L3 ≤ 2.4 mm.

Compared with the prior art, the present disclosure has the following beneficial effects.

In the battery cell housing and cover plate mating structure of the present disclosure, the boss and the lapping portion are arranged on the cover plate, the boss is in near-zero-clearance fit with the opening, the lapping portion laps onto an end portion of the battery cell housing, and the outer end surface of the lapping portion is flush with the outer side surface of the battery cell housing. Moreover, the ratio K1 of the thickness of the lapping portion to the thickness of the cover plate and the ratio K2 of the thickness of the boss to the thickness of the cover plate are set respectively. In this way, the fitting degree of the battery cell housing and the cover plate can be improved, thereby improving the welding strength and welding yield between the battery cell housing and the cover plate, and further ensuring post-welding sealing performance.

In addition, the thickness of the cover plate is set within a range of 1.5 mm to 3 mm. This design can achieve both low cost and high welding quality, and avoid an increase in the weight and structural cost of the cover plate caused by an overlarge thickness of the cover plate, and the occurrence of increased welding difficulty and welding cracking caused by a small thickness of the cover plate. The thickness of the lapping portion is set within a range of 0.6 mm to 2.5 mm. This design can avoid affecting the welding strength of the weld seam due to a small dimension. The thickness setting of the boss can ensure butt welding between the battery cell housing and the cover plate, and guarantee the post-welding sealing effect.

In addition, the arrangement of the guide insertion portion on the boss facilitates extension of the boss into the battery cell housing 1 and assembly of the cover plate with the battery cell housing. The guide insertion portion is in the form of a chamfer, which has the characteristics of simple structure, convenient processing, and manufacturing and low cost. The settings of the ratios K3 and K4 can advantageously ensure the welding quality of the butt weld between the battery cell housing and the cover plate, and solve the problems of unqualified welding caused by small dimensions and material waste caused by overlarge dimensions. In the structure provided with the guide insertion portion, the dimension of the portion of the boss in contact with the battery cell housing is set within a range of 0.5 mm to 2.4 mm. This design can further ensure the butt welding quality between the battery cell housing and the cover plate, and improve the yield rate of one-time welding.

Another objective of the present disclosure is to provide a battery cell internally provided with the battery cell housing and cover plate mating structure as described above.

Further, a positive cover plate and a negative cover plate are respectively arranged at two ends of a battery cell housing in the battery cell, and the battery cell housing and cover plate mating structure is adopted for connection between the positive cover plate and the battery cell housing.

Further, a positive cover plate and a negative cover plate are respectively arranged at two ends of a battery cell housing in the battery cell, and the battery cell housing and cover plate mating structure is adopted for connection between the negative cover plate and the battery cell housing.

The use of the battery cell housing and cover plate mating structure described above in the battery cell of the present disclosure can improve the welding strength between the battery cell housing and the cover plate, increase the welding yield therebetween, and achieve excellent use effect.

Another objective of the present disclosure is to provide a battery pack internally provided with the battery cell as described above.

The use of the battery cell described above in the battery pack of the present disclosure can improve the welding strength between the battery cell housing 1 and the cover plate 2, and the welding yield therebetween, thereby advantageously improving the quality and service performance of the battery pack.

### BRIEF DESCRIPTION OF DRAWINGS

The drawings, which constitute a part of the present disclosure, are used to provide a further understanding of the present disclosure. The exemplary embodiments of the present disclosure and the descriptions thereof are used for interpreting the present disclosure, and do not constitute an improper limitation on the present disclosure. In the drawings:
FIG. 1 is a schematic structural view of the battery cell housing and cover plate mating structure according to an embodiment of the present disclosure;
FIG. 2 is a schematic structural view of the cover plate according to an embodiment of the present disclosure;
FIG. 3 is a partially enlarged view of the battery cell housing according to an embodiment of the present disclosure;
FIG. 4 is a schematic structural view of the battery cell according to an embodiment of the present disclosure; and
FIG. 5 shows enlarged metallographic views of a weld position after the battery cell housing is welded to cover plates in other structural forms according to an embodiment of the present disclosure (the left image shows a defective product, and the right image shows a qualified product).

Reference numerals:
1. battery cell housing; 11. opening;
2. cover plate; 21. boss; 22. lapping portion; 211. chamfer;
3. battery cell electrode assembly.

### DETAILED DESCRIPTION OF EMBODIMENTS

It should be noted that the embodiments in the present disclosure and the features in the embodiments can be combined with each other without conflict.

In the description of the present disclosure, it should be noted that, if terms such as "upper", "lower", "inner", and "outer" indicating orientation or positional relationship appear, they are based on the orientation or positional relationship shown in the drawings, and are only for the convenience of describing the present disclosure and simplifying the description, rather than indicating or implying that the referred device or component must have a specific orientation, be constructed and operated in a specific orientation. Therefore, such terms should not be construed as limiting the present disclosure. In addition, if terms such as "first" and "second" appear, they are also used for descriptive purposes only and should not be construed as indicating or implying relative importance.

Furthermore, in the description of the present disclosure, unless otherwise explicitly defined, the terms "mount", "connect", "link", and "connecting member" should be understood in a broad sense. For example, such terms can refer to a fixed connection, a detachable connection, or an integral connection; they can refer to a mechanical connection or an electrical connection; they can refer to direct connection, or an indirect connection via an intermediate medium, or internal communication between two components. For those of ordinary skill in the art, the specific meanings of the above terms in the present disclosure can be understood in light of specific circumstances.

The present disclosure will be described in detail below with reference to the drawings and in conjunction with the embodiments.

### Embodiment 1

Embodiments of the present disclosure relate to a battery cell housing and cover plate mating structure, which can improve the welding strength and welding yield between a battery cell housing 1 and a cover plate 2.

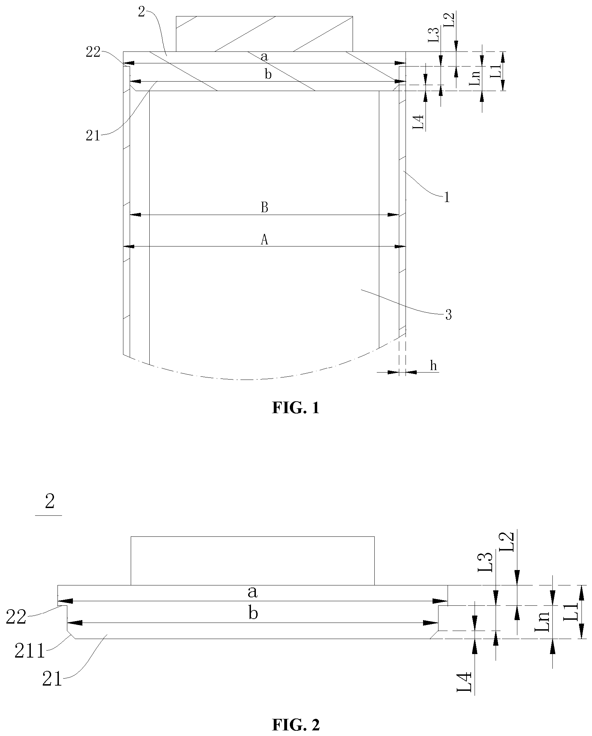

In terms of the overall configuration, the battery cell housing and cover plate mating structure of the present embodiment, as shown in FIG. 1, includes an opening 11 formed in the battery cell housing 1, and the cover plate 2 seals the opening 11. Moreover, the cover plate 2 is provided with a boss 21 protruding toward one side of the battery cell housing, and the root portion of the boss 21 is provided with a lapping portion 22; the boss 21 extends into the battery cell housing 1 via the opening 11; the lapping portion 22 laps onto the battery cell housing 1; a length and a width of the boss 21 are set corresponding to a length and a width of the opening 11, respectively; an outer end surface of the lapping portion 22 is flush with an outer side surface of the battery cell housing 1; and the cover plate 2 is welded to the battery cell housing 1. In addition, in an assembled state of the cover plate and the battery cell housing, a ratio K1 of a thickness L2 of the lapping portion to a thickness L1 of the cover plate satisfies: K1 = L2/L1, and 16.7% ≤ K1 ≤ 80%; and a ratio K2 of a thickness Ln of the boss to the thickness L1 of the cover plate satisfies: K3 = Ln/L1, and 20% ≤ K2 ≤ 83.3%, and also satisfies: K1 + K2 = 1.

In this case, the boss 21 extending into the battery cell housing 1 is in near-zero-clearance fit with the opening 11, the lapping portion 22 laps onto an end portion of the battery cell housing 1, and the outer end surface of the lapping portion is flush with the outer side surface of the battery cell housing. Meanwhile, the ratio K1 of the thickness of the lapping portion to the thickness of the cover plate and the ratio K2 of the thickness of the boss to the thickness of the cover plate are set respectively. In this way, the fitting degree of the battery cell housing 1 and the cover plate 2 can be improved, thereby improving the welding strength and welding yield between the battery cell housing 1 and the cover plate 2, and further ensuring post-welding sealing performance.

In detail, the battery cell housing 1 is in a rectangular parallelepiped structure, which is hollow inside to form a receiving cavity for receiving a cell electrode assembly 3. An opening 11 is provided at the top of the battery cell housing; or for the battery cell housing 1 of a blade battery, openings 11 are formed at two opposite side ends thereof. The opening is rectangular. The cover plate 2 is welded to the battery cell housing 1 and seals the opening 11.

In this embodiment, with reference to FIGS. 1 and 2, the cover plate 2 is provided with a boss 21 protruding toward one side thereof, and a lapping portion 22 is formed at the root portion of the boss 21. A lap joint surface where the lapping portion 22 laps onto an end portion of the battery cell housing 1 forms a stepped shape together with the boss 21. In an assembled state, the boss 21 extends into the battery cell housing 1 via the opening 11, and the length of the boss 21 is substantially equal to that of the opening 11, and the width of the boss 21 is substantially equal to that of the opening 11. In this way, the boss 21 can well seal the opening 11 and provide a certain supporting effect on the side wall of the battery cell housing 1, so that the fitting degree between the battery cell housing 1 and the cover plate 2 can be improved, thereby improving the welding strength and welding yield. The lapping portion 22 laps onto the battery cell housing 1, and the outer end surface of the lapping portion 22 is flush with the outer side surface of the battery cell housing 1, thereby ensuring appearance consistency and also advantageously ensuring post-welding sealing performance.

It should be noted that the length dimensions of the boss 21 and the opening 11 should be as equal as possible, and their width dimensions should also be as equal as possible. In the manufacturing process, due to processing errors, the tolerance range of the length dimension and width dimension of the opening 11 is ±0.1 mm, and the tolerance range of the length dimension and width dimension of the boss 21 is ±0.05 mm. In addition, it should also be noted that a, b, A and B in FIG. 1 respectively indicate the width of the lapping portion 22, the width of the boss 21, the outer width of the battery cell housing 1, and the width of the opening 11.

In this embodiment, in the assembled state of the cover plate and the battery cell housing, the ratio K1 of the thickness L2 of the lapping portion to the thickness L1 of the cover plate satisfies: K1 = L2/L1, and 16.7% ≤ K1 ≤ 80%; and the ratio K2 of the thickness Ln of the boss to the thickness L1 of the cover plate satisfies: K2 = Ln/L1, 20% ≤ K2 ≤ 83.3%, and K1 + K2 = 1. Such an arrangement advantageously reduces the manufacturing cost and ensures good welding quality.

As a preferred implementation mode, in this embodiment, the thickness L1 of the cover plate 2 satisfies: 1.5 mm ≤ L1 ≤ 3 mm. This design can achieve both low cost and high welding quality, avoid an increase in the weight and structural cost of the cover plate 2 caused by an overlarge thickness of the cover plate 2, and avoid the occurrence of increased welding difficulty and welding cracking caused by a small thickness of the cover plate 2. In a specific implementation, the thickness of the cover plate 2 can be set to 1.5 mm, 2.0 mm, 2.5 mm, 3 mm, or the like, and is preferably 2 mm.

Moreover, in this embodiment, the thickness L2 of the lapping portion 22 satisfies: 0.5 mm ≤ L2 ≤ 2.4 mm. Setting the thickness value of the lapping portion 22 can avoid affecting the welding strength of the weld seam due to a small dimension. In a specific implementation, the thickness of the lapping portion 22 can be set to 0.5 mm, 0.75 mm, 0.95 mm, 1.1 mm, 1.3 mm, 1.5 mm, 1.75 mm, 1.95 mm, 2.15 mm, 2.25 mm, or 2.4 mm, and is preferably set to 0.75 mm.

In this embodiment, the thickness Ln of the boss 21 satisfies: 0.6 mm ≤ Ln ≤ 2.5 mm. In this way, butt welding between the battery cell housing 1 and the cover plate 2 can be ensured, thereby ensuring the post-welding sealing effect. In a specific implementation, the thickness of the boss 21 can be set to values such as 0.6 mm, 0.75 mm, 0.95 mm, 1.1 mm, 1.3 mm, 1.5 mm, 1.75 mm, 1.95 mm, 2.15 mm, 2.25 mm, or 2.5 mm.

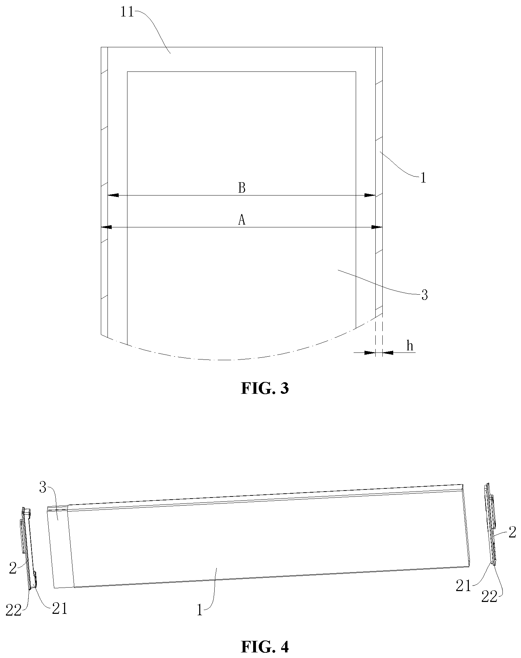

With reference to FIGS. 1 and 3, in this embodiment, a wall thickness h of the battery cell housing 1 satisfies: 0.2 mm ≤ h ≤ 3 mm, so that the battery cell housing 1 has favorable structural strength and lower manufacturing cost. In a specific implementation, the thickness h of the battery cell housing 1 can be set to values such as 0.2 mm, 0.5 mm, 1.0 mm, 1.5 mm, 2.0 mm, 2.5 mm, or 3 mm (The thickness of the housing does not affect the post-welding effect), and no specific limitation is made herein.

As a preferred implementation mode, in this embodiment, a guide insertion portion is provided on the boss 21. The arrangement of the guide insertion portion facilitates extension of the boss 21 into the battery cell housing 1 and assembly of the cover plate 2 with the battery cell housing 1. In a specific implementation, as shown in FIGS. 1 and 2, the guide insertion portion includes a chamfer 211 formed at an end portion of the boss 21. The guide insertion portion in the structural form of the chamfer 211 has the characteristics of simple structure, convenient processing and manufacturing, and low cost.

In this embodiment, the chamfer 211 is provided at an end portion of the boss 21. In this case, along a direction of the boss 21 extending into the battery cell housing 1, a ratio K3 of a dimension L3 of the portion of the boss in contact with the battery cell housing to the thickness L1 of the cover plate satisfies: K3 = L3/L1, and 16.7% ≤ K3 ≤ 80%. Moreover, as a further improvement, a ratio K4 of a sum of the thickness L2 of the lapping portion and the dimension L3 of the portion of the boss in contact with the battery cell housing to the thickness L1 of the cover plate satisfies: K4 = (L2 + L3)/L1, and 33.3% ≤ K4 ≤ 96.7%. The settings of the ratios K3 and K4 can advantageously ensure the welding quality of the butt weld between the battery cell housing and the cover plate, and solve the problems of unqualified welding caused by small dimensions and material waste caused by overlarge dimensions.

In a specific implementation, the dimension L3 of the portion of the boss 21 in contact with the battery cell housing 1 satisfies: 0.5 mm ≤ L3 ≤ 2.4 mm. As a preferred implementation mode, L3 is 0.95 mm. In this way, smooth assembly of the boss 21 into the opening 11 can be ensured, the quality of butt welding between the battery cell housing 1 and the cover plate 2 can be further ensured, and the yield rate of one-time welding can be improved. In this case, the distance L4 of the chamfer 211 along the direction of the boss 21 extending into the battery cell housing 1 is between 0.1 mm and 2 mm, and is preferably 0.3 mm.

In this embodiment, during specific assembly and welding of the battery cell housing and the cover plate, a pre-spot welding process is performed on the cover plate and the periphery of the battery cell housing before the welding process, so that the cover plate is pre-fixed to the battery cell housing, and pre-spot welding points will cover the gap formed by the fit between the cover plate and the battery cell housing. Moreover, the assembly gap between the cover plate and the battery cell housing can be controlled within 0.15 mm (when the assembly gap is larger than 0.15 mm, i.e., a large gap, the laser pre-spot welding effect will be poorer, resulting in lower welding strength between the battery cell housing and the cover plate after laser peripheral welding, and a pressure resistance lower than 1.2 MPa). Such a gap can ensure the welding effect of pre-spot welding, thereby ensuring the welding strength between the battery cell housing and the cell cover plate after peripheral welding. The welding strength (i.e., pressure resistance) is greater than 1.2 MPa, and the helium leak rate of the battery after peripheral welding is less than 1*10-7 pa*m3/s.

Hereinafter, the fact that the battery cell housing and cover plate mating structure of the present disclosure can better improve welding quality and welding airtightness is verified by a plurality of examples and comparative examples in Table 1 and Table 2. The battery cell housing 1 of the same dimensional specification is respectively assembled with covers of different dimensions (different L1, L2, L3, and L4), followed by laser butt welding. The specific dimensional specifications are shown in Table 1 and Table 2 as follows.

**Table 1**

| Table 1 | Dimensions/ mm | | | | | | | | | | | |
|---|---|---|---|---|---|---|---|---|---|---|---|---|
| | 1# | 2# | 3# | 4# | 5# | 6# | 7# | 8# | 9# | 10# | 11# | 12# |
| L1 | 2 | 1.5 | 3 | 1.5 | 1.5 | 2 | 2 | 3 | 3 | 3 | 2.5 | 2.5 |
| L2 | 0.75 | 0.75 | 1.25 | 0.75 | 0.45 | 0.95 | 1.25 | 2.05 | 2.05 | 2.4 | 0.45 | 0.45 |
| L3 | 0.95 | 0.65 | 1.25 | 0.45 | 0.75 | 0.75 | 0.45 | 0.45 | 0.65 | 0.5 | 1.75 | 1.55 |
| L4 | 0.3 | 0.1 | 0.5 | 0.3 | 0.3 | 0.3 | 0.3 | 0.5 | 0.3 | 0.1 | 0.3 | 0.5 |
| Conclusion | OK | OK | OK | NG | NG | OK | NG | NG | OK | OK | NG | NG |

**Table 2**

| Table 2 | Dimensions/mm | | | | | | | | | | | | | | |
|---|---|---|---|---|---|---|---|---|---|---|---|---|---|---|---|
| | 13 # | 14 # | 15 # | 16 # | 17 # | 18 # | 19 # | 21 # | 22 # | 23 # | 24 # | 25 # | 26 # | 27 # | 28 # |
| L1 | 1.5 | 1.5 | 2.0 | 2.0 | 2.5 | 3.0 | 1.5 | 1.5 | 2.0 | 2.0 | 2.5 | 3.0 | 3.0 | 3.0 | 3.0 |
| L2 | 0.9 | 0.6 | 0.75 | 1.0 | 1.0 | 1.5 | 0.8 | 0.3 | 1.3 | 0.40 | 1.6 | 2.25 | 0.5 | 0.5 | 0.5 |
| L3 | 0.5 | 0.6 | 0.75 | 0.5 | 1.0 | 1.0 | 0.3 | 1.1 | 0.2 | 1.1 | 0.40 | 0.45 | 2.4 | 2 | 0.5 |
| L4 | 0.1 | 0.3 | 0.5 | 0.5 | 0.5 | 0.5 | 0.5 | 0.1 | 0.5 | 0.5 | 0.5 | 0.3 | 0.1 | 0.5 | 2 |
| Conclusion | OK | OK | OK | OK | OK | OK | NG | NG | NG | NG | NG | NG | Ok | Ok | Ok |

It can be seen from the data in the above tables that in comparison of Samples 2#, 4#, and 5#, the cover plates all have a thickness of 1.5 mm, and the effects after the cover plates are welded to the housing are as follows. The dimension L3 of the cover plate in Sample 4# is 0.45 mm, and the dimension L2 of the cover plate in Sample 5# is 0.45 mm, both of which are relatively small. After laser welding of the cover plates and the housing, welding beads appear at the welded portions (with a small dimension L3, the molten portions form welding beads after laser welding). The strength (i.e., pressure resistance) of the battery cell housing after welding is less than 1.2 MPa, even less than 1.0 MPa, and the helium leak rate after welding is greater than 1*10-7pa*m3/s. In comparison of Samples 5#, 11#, and 12#, the cover plates have a dimension L2 of 0.45 mm, which is relatively small. After laser welding of the cover plates and the housing, welding beads appear at all welded portions, and the welding strength and helium leak rate fail to meet the requirements.

In comparison of Samples 1#, 6#, and 7#, the cover plates all have a thickness of 2 mm, and the effects after the cover plates are welded to the housing are as follows. The cover plate in Sample 7# has a dimension L3 of 0.45 mm, which is relatively small, welding beads also appear at the welded portion, and the welding strength and helium leak rate fail to meet the requirements.

In comparison of Samples 3#, 8#, 9#, and 10#, the cover plates all have a thickness of 3 mm, and the effects after the cover plates are welded to the housing are as follows. The cover plate in Sample 8# has a dimension L3 of 0.45 mm, which is relatively small, welding beads also appear at the welded portion, and the welding strength and helium leak rate fail to meet the requirements. The cover plate in Sample 10# has a dimension L3 of 0.5 mm, no welding bead appears at the laser butt welded portion, and the overall welding airtightness is favorable.

After the cover plates 2 in Samples 1#, 2#, and 3# are welded to the battery cell housing 1 respectively, no welding bead appears at the laser butt welded portions, and the overall welding airtightness is favorable. However, after laser welding of the cover plate in Sample 4#, welding beads appear at the welded portion, resulting in poor overall welding airtightness.

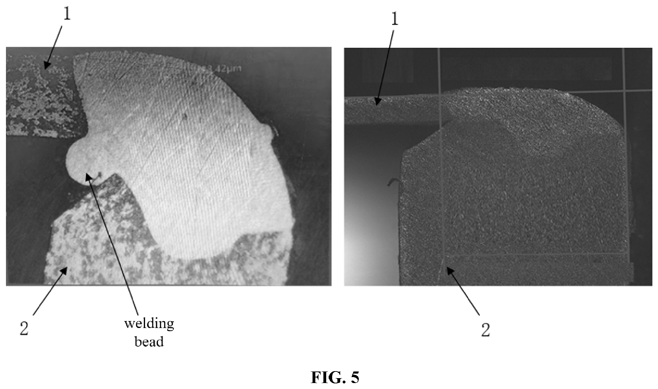

With reference to FIG. 5, the left image is an enlarged metallographic view of the weld position after the battery cell housing is welded to a cover plate in another structural form, and the right image is an enlarged metallographic view of the weld position after welding of the battery cell housing and cover plate mating structure of this embodiment. It can be seen from the comparison between the left and right images in FIG. 5 that welding beads appear in the left image after welding, resulting in an unqualified welding effect, while no welding bead appears in the right image after welding, resulting in favorable welding quality.

It can be seen from the above analysis that the dimensions L2 and L3 of the cover plate must be greater than 0.5 mm. In the design solution, when L2 is set to 0.75 mm and L3 is set to 0.65 mm, the welding requirements are satisfied. The value of L4 can be set to 0.1 mm or above (which can be determined with reference to the thickness of the cover plate). The minimum thickness of the cover plate can be 0.75 mm + 0.65 mm + 0.1 mm = 1.5 mm. Considering that the thickness of the cover plate affects the strength thereof, the commonly used thickness in the industry is 2.0 mm (which meets the welding standards). A cover plate with a thickness of 3 mm can better meet the requirements for welding strength and sealing performance, but will result in an increase in material costs. Therefore, the cover plate 2 in Sample 1# has preferred fitting dimensions.

The battery cell housing and cover plate mating structure of the present embodiment can enhance the fitting degree between the battery cell housing 1 and the cover plate 2 by restricting and defining the fitting dimensions therebetween, thereby improving the welding yield between the battery cell housing 1 and the cover plate 2, reducing material costs, and enhancing production efficiency.

### Embodiment 2

An embodiment of the present disclosure also relates to a battery cell internally provided with the battery cell housing and cover plate mating structure described in Embodiment 1.

As shown in FIG. 4, in the battery cell of this embodiment, a positive cover plate and a negative cover plate are respectively arranged at two ends of the battery cell housing 1, and are respectively welded to the two ends of the battery cell housing 1. The battery cell housing and cover plate mating structure of Embodiment 1 is adopted for connection between the positive cover plate and the battery cell housing 1, and the mating structure is also adopted for connection between the negative cover plate and the battery cell housing 1. That is, the positive cover plate 2 and the negative cover plate 2 are each provided with a boss 21 and a lapping portion 22. The boss 21 and the lapping portion 22 on the positive cover plate 2, and the boss 21 and the lapping portion 22 on the negative cover plate 2 are respectively assembled and fitted with the openings 11 at the two ends of the battery cell housing 1.

It can be appreciated that besides the battery cell housing and cover plate mating structure of Embodiment 1 for connection between the positive cover plate and the battery cell housing 1 and the mating structure for connection between the negative cover plate and the battery cell housing 1, the mating structure can also be provided only between the positive cover plate and the battery cell housing 1, or only between the negative cover plate and the battery cell housing 1.

The use of the battery cell housing and cover plate mating structure of Embodiment 1 in the battery cell of this embodiment can improve the welding strength between the battery cell housing 1 and the cover plate 2, increase the welding yield therebetween, and achieve excellent use effect.

### Embodiment 3

An embodiment of the present disclosure further relates to a battery pack internally provided with the battery cell of Embodiment 2. In a specific implementation, a plurality of battery cells are stacked to form a battery module, and the battery module is accommodated in a housing of the battery pack.

The use of the battery cell of Embodiment 2 in the battery pack of this embodiment can improve the welding strength between the battery cell housing 1 and the cover plate 2, and the welding yield therebetween, thereby advantageously improving the quality and service performance of the battery pack.

The above are only preferred embodiments of the present disclosure and are not intended to limit the present disclosure. Any modifications, equivalent substitutions, improvements, and the like made within the spirit and principles of the present disclosure shall all fall within the scope of the present disclosure.

## Claims

1. A battery cell housing and cover plate mating structure, comprising:
an opening (11) formed in the battery cell housing (1), wherein
a cover plate (2) is provided with a boss (21) protruding toward one side of the battery cell housing (1), and a root portion of the boss (21) is provided with a lapping portion (22); the boss (21) extends into the battery cell housing (1) via the opening (11); the lapping portion (22) laps onto the battery cell housing (1); a length and a width of the boss (21) are set corresponding to a length and a width of the opening (11), respectively; an outer end surface of the lapping portion (22) is flush with an outer side surface of the battery cell housing (1); and the cover plate (2) is welded to the battery cell housing (1), wherein
in an assembled state of the cover plate (2) and the battery cell housing (1), a ratio K1 of a thickness L2 of the lapping portion (22) to a thickness L1 of the cover plate (2) satisfies: K1 = L2/L1, and 16.7% ≤ K1 ≤ 80%; and a ratio K2 of a thickness Ln of the boss (21) to the thickness L1 of the cover plate (2) satisfies: K2 = Ln/L1, and 20% ≤ K2 ≤ 83.3%, and also satisfies: K1 + K2 = 1.

2. The battery cell housing and cover plate mating structure as claimed in claim 1, wherein
the thickness L1 of the cover plate (2) satisfies: 1.5 mm ≤ L1 ≤ 3 mm.

3. The battery cell housing and cover plate mating structure as claimed in claim 1, wherein
the thickness L2 of the lapping portion (22) satisfies: 0.5 mm ≤ L2 ≤ 2.4 mm.

4. The battery cell housing and cover plate mating structure as claimed in claim 1, wherein
the thickness Ln of the boss (21) satisfies: 0.6 mm ≤ Ln ≤ 2.5 mm.

5. The battery cell housing and cover plate mating structure as claimed in claim 1, wherein
a wall thickness h of the battery cell housing (1) satisfies: 0.2 mm ≤ h ≤ 3 mm.

6. The battery cell housing and cover plate mating structure according to any one of claims 1 to 5, wherein
a guide insertion portion is provided on the boss (21).

7. The battery cell housing and cover plate mating structure as claimed in claim 6, wherein
the guide insertion portion comprises a chamfer (211) formed at an end portion of the boss (21).

8. The battery cell housing and cover plate mating structure as claimed in claim 7, wherein
a distance L4 of the chamfer (211) along a direction of the boss (21) extending into the battery cell housing (1) is between 0.1 mm and 2 mm.

9. The battery cell housing and cover plate mating structure as claimed in claim 7, wherein
along a direction of the boss (21) extending into the battery cell housing (1), a ratio K3 of a dimension L3 of a portion of the boss (21) in contact with the battery cell housing (1) to the thickness L1 of the cover plate (2) satisfies: K3=L3/L1, and 16.7% ≤ K3 ≤ 80%.

10. The battery cell housing and cover plate mating structure as claimed in claim 9, wherein
a ratio K4 of a sum of the thickness L2 of the lapping portion (22) and the dimension L3 of the portion of the boss (21) in contact with the battery cell housing (1) to the thickness L1 of the cover plate (2) satisfies: K4 = (L2 + L3)/L1, and 33.3% ≤ K4 ≤ 96.7%.

11. The battery cell housing and cover plate mating structure as claimed in claim 9, wherein
the dimension L3 of the portion of the boss (21) in contact with the battery cell housing (1) satisfies: 0.5 mm ≤ L3 ≤ 2.4 mm.

12. A battery cell, wherein
the battery cell is internally provided with the battery cell housing and cover plate mating structure as claimed in any one of claims 1 to 11.

13. The battery cell as claimed in claim 12, wherein
a positive cover plate and a negative cover plate are respectively arranged at two ends of a battery cell housing (1) in the battery cell; and
the battery cell housing and cover plate mating structure is adopted for connection between the positive cover plate and the battery cell housing (1).

14. The battery cell as claimed in claim 12, wherein
a positive cover plate and a negative cover plate are respectively arranged at two ends of a battery cell housing (1) in the battery cell; and
the battery cell housing and cover plate mating structure is adopted for connection between the negative cover plate and the battery cell housing (1).

15. A battery pack, wherein
the battery pack is internally provided with the battery cell as claimed in any one of claims 12 to 14.
